# EUROPEAN PATENT SPECIFICATION

(11) **EP 4 648 178 B1**
(45) Date of publication and mention of the grant of the patent: **04.11.2026**
(21) Application number: 24213934.3
(22) Date of filing: 19.11.2024
(51) Int. Cl.: H01M 10/613, H01M 10/6556, H01M 10/6557, H01M 50/209

(54) **LIQUID COOLING STRUCTURE AND BATTERY PACK**
FLÜSSIGKEITSKÜHLUNGSSTRUKTUR UND BATTERIEPACK
STRUCTURE DE REFROIDISSEMENT PAR LIQUIDE ET BLOC-BATTERIE

(30) Priority: 10.05.2024 CN 202421016169 U; 20.09.2024 WO PCT/CN2024/120009
(43) Date of publication of application: 12.11.2025
(73) Proprietor: Eve Energy Co. Ltd., Huizhou, Guangdong 516000 (CN)
(72) Inventor: Chen, Shanda, Huizhou, Guangdong, 516000 (CN); Liao, Lie, Huizhou, Guangdong, 516000 (CN)
(74) Representative: Michalski Hüttermann & Partner mbB

(56) References cited:
- CN-U- 217 387 306
- CN-U- 218 586 121
- CN-U- 220 491 967
- CN-U- 220 627 915

## Description

### TECHNICAL FIELD

The present disclosure relates to the technical field of batteries, and in particular, to a liquid cooling structure and a battery pack.

### BACKGROUND

With the development of battery technology, energy-type batteries currently used in the energy storage industry are developing in a direction of high energy density, large capacity, and high rate charging and discharging. Due to application requirements of the high energy density and the influence of the arrangement of a cell set, the cell set may generate a large amount of heat in a short period of time during the high rate charging and discharging process of the cell set, resulting in an increase in the temperature of the cell set and uneven distribution.

CN220627915U relates to a cooling device and a battery pack, falling within the field of battery technology. The cooling device includes a liquid cooling plate with internal flow channels and a reinforcement assembly positioned within the flow channels. The cooling device features a first direction X and a first plate and a second plate positioned oppositely along the first direction X. The first plate and the second plate enclose the flow channels. The reinforcement assembly is a rigid component including a first connection portion, a support portion, and a second connection portion connected sequentially. The first connection portion is fixedly connected to the first plate, while the second connection portion is fixedly connected to the second plate. Along the first direction X, the first and second connection portions are offset. The support portion maintains a gap between both the first plate and the second plate. This gap provides space for deformation of the liquid cooling plate. When the liquid cooling plate is compressed to abut the support portion, the support portion can limit the movement of the first plate and the second plate, thereby preventing flow channel blockage and ensuring the heat exchange function of the cooling device remains effective.

CN218586121U relates to an air-cooled aluminum tube for energy storage lithium batteries. The air-cooled aluminum tube includes a flat, elongated oval ventilation channel. Several supporting ribs, inclined downwards or upwards, are interlaced within the oval ventilation channel. Each supporting rib includes a first rib segment, a second rib segment, and a third rib segment connected sequentially. The first and third rib segments are straight ribs vertically connected to the top and bottom inner walls of the oval ventilation channel, respectively. The third rib segment is an inclined rib connecting the first and third rib segments. The supporting ribs uniformly divide the oval ventilation channel into several irregularly shaped ventilation holes. CN218586121U exhibits high resistance to lithium battery expansion, low ventilation resistance, and prevents dust accumulation within the ventilation holes, thus maintaining its proper heat exchange area.

### SUMMARY

The invention is defined by the features of the independent claim 1. In order to cool down the cell set during the charging and discharging process, a liquid cooling plate is usually provided at the bottom of the cell set, so as to cool down the cell set by heat exchange between the liquid cooling plate and the cell set.

However, the current liquid cooling setup is not adapted to the current CTP, Cell to Pack, assembly.

As a first aspect of the present invention, a liquid cooling structure according to claim 1 is provided. The liquid cooling structure includes: a support plate, configured to support cells; and a vertical plate, perpendicular to the support plate. The vertical plate includes a main body and a plurality of telescopic ribs provided within the main body, a liquid cooling channel configured to circulate a liquid coolant is formed in the main body, the plurality of the telescopic ribs are spaced apart in the liquid cooling channel, and each of the telescopic ribs is connected between two opposite side walls of the liquid cooling channel to separate the liquid cooling channel into a plurality of sub-channels.

As a second aspect of the present invention, a battery pack according to claim 6 is provided. The battery pack includes the above liquid cooling structure and a plurality of, sequentially provided side by side on the support plate of the liquid cooling structure.

By the setting of the vertical plate configured to circulate the liquid coolant, it is capable of exchanging heat with the cells, thereby realizing cooling of the cells in the charging and discharging process of the cells. In addition, due to the setting of the telescopic ribs in the vertical plate, the telescopic ribs are able to be compressed when a thermal expansion occurs in the cells, but the cells are not able to compress the telescopic ribs infinitely due to a certain structural strength of the telescopic ribs, so as to allow the vertical plate to have an anti-expansion effect on the cells during the thermal expansion of the cells. Further, by the setting of the support plate configured to support the cells, the liquid cooling structure and the cells 200 is able to be assembled to form a module, so that the module is capable of being used for CTP, Cell to Pack, assembly directly, improving the assembly efficiency of a battery pack.

### BRIEF DESCRIPTION OF THE DRAWINGS

Fig. 1 shows a schematic diagram of the liquid cooling structure in a perspective view according to an embodiment of the present disclosure;
Fig. 2 shows a left view of the liquid cooling structure in Fig. 1;
Fig. 3 shows an enlarged schematic diagram at I in Fig. 2; and
Fig. 4 shows a reference diagram of the liquid cooling structure in Fig. 1 in a use state.

Marks: 100 liquid cooling structure, 10 support plate, 20 vertical plate, 21 main body, 22 telescopic rib, 23 liquid cooling channel, 231 sub-channel, 24 limiting rib, 25 flow segment, 26 support segment, 27 barrier segment, 200 cell.

### DETAILED DESCRIPTION

The present disclosure is further described below in conjunction with the attached drawings.

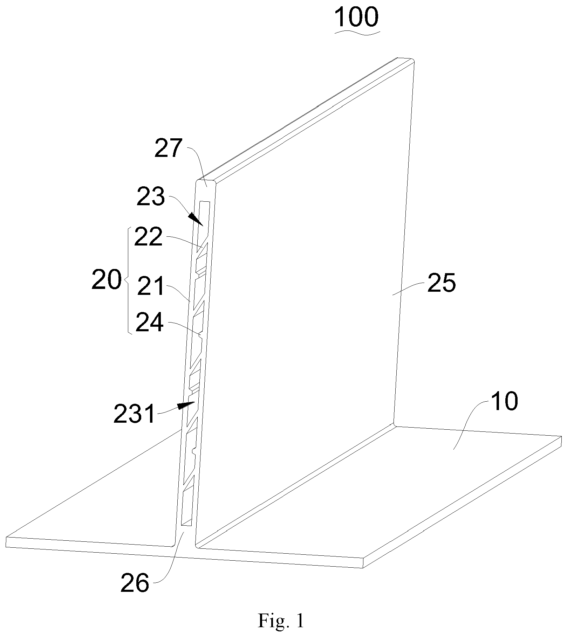

Referring to Figs. 1 to 3, a liquid cooling structure 100 is provided according to an embodiment of the present disclosure, which includes a support plate 10 and a vertical plate 20.

The support plate 10 is configured to support cells 200. The vertical plate 20 are perpendicular to the support plate 10 and configured to circulate a liquid coolant, so to be capable of exchanging heat with the cells 200. The vertical plate 20 includes a main body 21 and a plurality of telescopic ribs 22 provided within the main body 21, a liquid cooling channel 23 configured to circulate the liquid coolant is formed within the main body 21, the plurality of telescopic ribs 22 are spaced apart in the liquid cooling channel 23, and each of the telescopic ribs 22 is connected between two opposite side walls of the liquid cooling channel 23 to separate the liquid cooling channel 23 into a plurality of sub-channels 231.

The above-described liquid cooling structure 100, by the setting of the vertical plate 20 configured to circulate the liquid coolant, is capable of exchanging heat with the cells 200, thereby realizing cooling of the cells 200 in the charging and discharging process of the cells. In addition, due to the setting of the telescopic ribs 22 in the vertical plate 20, the telescopic ribs 22 are able to be compressed when a thermal expansion occurs in the cells 200, but the cells 200 are not able to compress the telescopic ribs 22 infinitely due to a certain structural strength of the telescopic ribs 22, so as to allow the vertical plate 20 to have an anti-expansion effect on the cells 200 during the thermal expansion of the cells 200. Further, by the setting of the support plate 10 configured to support the cells 200, the liquid cooling structure 100 and the cells 200 are able to be assembled to form a module, so that the module is capable of being used for CTP, Cell to Pack, assembly directly, improving the assembly efficiency of a battery pack.

In some implementations, the liquid cooling structure 100 is made of a metal material, such as aluminum alloy. Due to good ductility of the aluminum alloy, it has the property of being able to undergo plastic deformation without being broken when subjected to a force, so that the telescopic ribs 22 in the liquid cooling channel 23 is capable of withstanding the compression of the cells thereon when the thermal expansion occurs in the cells. Furthermore, it has an effect of resisting compression of the cells 200 due to the certain structural strength of the telescopic ribs 22. The telescopic ribs 22 are capable of driving the main body 21 back to its original shape when the expansion amount of the cells 200 is gradually reduced. In some implementations, the liquid cooling structure 100 may also be prepared from polyamide, i.e., PA, commonly known as nylon, which also provides support strength to the cells 200 and has corrosion-resistant and flame-retardant properties.

In some implementations, since the liquid cooling structure 100 is made of the aluminum alloy, it may be formed by extrusion molding, thereby facilitating the molding of the telescopic ribs 22 in the liquid cooling channel 23.

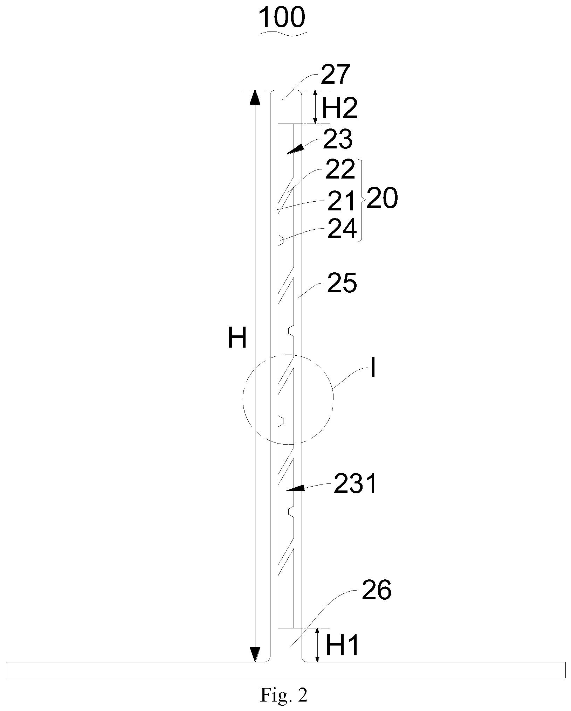

Referring to Fig. 2, in some embodiments, the telescopic ribs 22 are inclined with respect to the two opposite side walls of the liquid cooling channel 23 when setting the telescopic ribs 22, so that the telescopic ribs 22 that are inclined are susceptible to be deformed due to compression during thermal expansion of the cells 200, thereby ensuring the safe use of the cells 200.

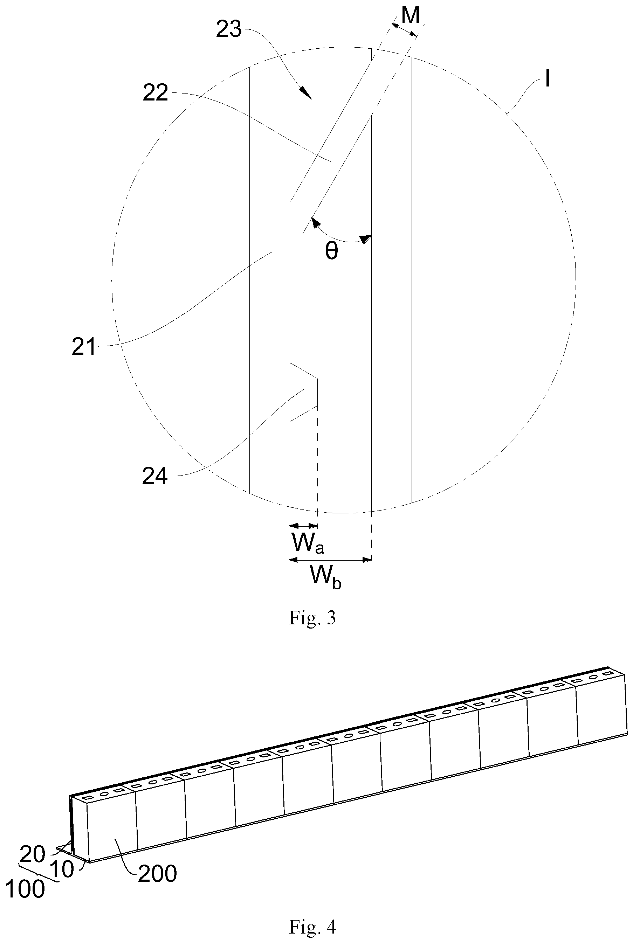

In some embodiments, referring to Fig. 3, an inclined angle of each of the telescopic ribs 22 is in a range of 30° to 60°, i.e., an angle θ between the telescopic ribs 22 and the side walls of the liquid cooling channel 23 is in a range of 30° to 60°. In this way, the telescopic ribs 22 are capable of being deformed relatively fast under the expansion and compression of the cells 200, and ensuring a certain support effect on the side walls of the liquid cooling channel 23, so that the vertical plate 20 has a certain anti-expansion effect on the expansion of the cells 200. the angle θ between the telescopic ribs 22 and the side walls of the liquid cooling channel 23 may be set to a degree such as 30°, 35°, 40°, 45°, 50°, 55°, or 60°, and is not limited herein.

In some implementations, the angle θ between the telescopic ribs 22 and the side walls of the liquid cooling channel 23 is set to 45°, so as to ensure that the telescopic ribs 22 are capable of being deformed relatively fast under the expansion and compression of the cells 200, and that the vertical plate 20 has a good structural strength and an anti-expansion effect on the cells 200.

In addition, referring to Fig. 3, in some embodiments, a thickness M of each of the telescopic ribs 22 is in a range of 1.0 mm to 2.5 mm. In this way, the telescopic ribs 22 have a certain structural strength to enable the entire vertical plate 20 to have a certain structural strength without being too easily deformed under the expansion and compression of the cells 200, and are also capable of ensuring an anti-expansion effect on the cells 200 so that the structure of the cells 200 is not damaged when the thermal expansion occurs in the cells 200, thereby improving the cyclic service life of the cells 200.

The thickness M of each of the telescopic ribs 22 may be set to a value such as 1.0 mm, 1.5 mm, 2.0 mm, or 2.5 mm, and is not limited herein.

Referring to Figs. 1 to 3, in some embodiments, in order to prevent the main body 21 from being compressed to deform excessively when over-expansion occurs in the cells 200 in an extreme case, the vertical plate 20 further includes a plurality of limiting ribs 24, the limiting ribs 24 are provided on at least one of the two opposite side walls of the liquid cooling channel 23, and the plurality of telescopic ribs 22 and the plurality of limiting ribs 24 are alternately provided one by one. In this way, by setting the limiting ribs 24, it is possible to limit a limiting distance at which the two opposite side walls of the liquid cooling channel 23 are close to each other, so that the main body 21 is prevented from excessive compression when over-expansion occurs in the cells 200, thereby avoiding causing damages to both the cells 200 and the liquid cooling structure 100.

The limiting ribs 24 are provided on the two opposite side walls of the liquid cooling channel 23. In this way, when the main body 21 is compressed by the cells 200, the limiting ribs 24 on one of the two opposite side walls of the liquid cooling channel 23 are able to be abutted against the other one of the two opposite side walls of the liquid cooling channel 23, so as to achieve the effect of preventing the cells 200 from over-expansion.

In some embodiments, a section of each of the limiting ribs 24 along the vertical direction is trapezoidal in shape. In other embodiments, the section of each of the limiting ribs 24 along the vertical direction may also be provided in the shape of a hemisphere, a square, or the like.

In some embodiments, each of the limiting ribs 24, along the flow direction of the liquid coolant, may be provided as a continuous strip structure, thereby facilitating the molding of the limiting ribs 24 in the liquid cooling channel 23. In some implementations, each of the limiting ribs 24 may be a structure with a plurality of segments that are spaced apart in sequence, so as to be able to produce a certain disturbing effect on the liquid coolant, thereby improving the heat exchange efficiency between the liquid coolant and the cells 200.

The limiting ribs 24 are provided on the two opposite side walls of the liquid cooling channel 23, and the limiting ribs 24 are alternately provided on the two opposite side walls of the liquid cooling channel 23 in sequence. In this way, by the limiting ribs 24 alternately provided on the two opposite side walls in sequence, the structural strength of each of the two opposite side walls of the liquid cooling channel 23 is increased, and at the same time, each of the two opposite side walls of the liquid cooling channel 23 is capable of producing an anti-expansion effect on the cells 200.

Along a direction perpendicular to the flow direction of the liquid coolant, a width Wₐ of each of the limiting ribs 24 is 0.1 to 0.9 times a width W_{b} of the liquid cooling channel 23. In this way, it is adapted to the expansion amount of the cells 200, not only providing an expansion space for the cells 200, but also ensuring that the expansion amount of the cells 200 is within a safe expansion range. The width Wₐ of each of the limiting ribs 24 may be set to 0.1, 0.2, 0.3, 0.4, 0.5, 0.6, 0.7, 0.8, or 0.9, etc., times the width W_{b} of the liquid cooling channel 23, and is not limited herein.

In some implementations, the width Wₐ of each of the limiting ribs 24 is set to 0.5 times the width W_{b} of the liquid cooling channel 23 to not only ensure that the cells 200 do not over-expand, but also avoid that the expansion of the cells 200 is over-limited so as to lead to a risk of explosion of the cells 200.

Referring to Fig. 2, in some embodiments, the support plate 10 needs to support the cells 20, and the vertical plate 20 needs to be formed with the liquid cooling channel 23 to circulate the liquid coolant for heat exchange with the cells 200 so that the cells 200 needs to be in contact with and be abutted against a surface of the vertical plate 20, and therefore the vertical plate 20 requires sufficient support strength. The main body 21, from top to bottom, includes at least a flow segment 25 and a support segment 26, the flow segment 25 is formed with the liquid cooling channel 23, and the support segment 26 is a solid structure and is connected between the flow segment 25 and the support plate 10, so as to ensure the structural strength of the vertical plate 20 by setting the support segment 26 located at the lower end part to be solid.

In some embodiments, since an upper end of the vertical plate 20 may be contact with air, in order to ensure a liquid cooling effect of the liquid coolant in the vertical plate 20, the main body 21 further includes a barrier segment 27, which is provided at an end of the flow segment 25 away from the support segment 26, and the barrier segment 27 is a solid structure, i.e., an upper end part of the main body 21 is also provided as a solid structure. In this way, it is possible to separating the liquid coolant from the air located above the main body 21, so as to avoid heat exchange between the liquid coolant and the air located above it, thereby ensuring the heat exchange effect of the liquid coolant.

When setting the support segment 26 and the barrier segment 27, a height H1 of the support segment 26 and a height H2 of the barrier segment 27 are 0.05 to 0.1 times a height H of the main body 21, respectively. In this way, both the support strength of the support segment 26 and the effect of blocking the heat exchange of the barrier segment 27 are ensured, and it is also possible to ensure that the sufficient liquid coolant is able to be circulated in the flow segment 25 to realize a good heat exchange effect with the cells 200.

For example, the height H of the main body 21 is set to 100 mm, and the height of the support segment 26 and the height of the barrier segment 27 are 0.05 times the height of the main body 21, i.e., the height H1 of the support segment 26 and the height H2 of the barrier segment 27 are both 5 mm, such that a height of the liquid cooling channel 23 in the flow segment 25 is 100-5*2=90 mm, thereby ensuring a flow amount of liquid coolant in the liquid cooling channel 23.

In addition, referring to Fig. 4, in some embodiments, the liquid cooling structure 100 includes two support plates 10, i.e., the two support plates 10 are respectively provided on two opposite sides of the vertical plate 20, so as to support two cell sets with the two support plates 10, thereby fully utilizing energy by taking advantage of the property of heat exchange of surfaces on the two opposite sides of the vertical plate. Moreover, the two support plates 10 provided are capable of supporting more cells 200 to enable the cells 200 and the entire liquid cooling structure 100 to form a module, thereby facilitating to improving the power supply of the entire battery pack when subsequently forming the CTP.

The liquid cooling structure 100 described above, by setting the limiting ribs 24 on at least one of the side walls of the liquid cooling channel 23, is capable of preventing the cells 200 from being damaged by over-expansion through the limitation of the limiting ribs 24 when the cells 200 are in an extreme case. By setting the main body 21 with the barrier segment 27, the flow segment 25, and the support segment 26, the heat exchange between the liquid coolant and the air located above is blocked by the solid barrier segment 27, leading to a reduction in the heat exchange of the liquid coolant. By setting the solid support segment 26, the support strength of the entire vertical plate 20 is capable of being ensured.

Referring to Fig. 4, a battery pack is further provided in another embodiment of the present disclosure, which includes the liquid cooling structure 100 described above and a plurality of cells 200.

The plurality of cells 200 are sequentially provided side by side on the support plate 10 of the liquid cooling structure 100.

In some implementations, the plurality of cells 200 are sequentially provided side by side along a length direction of the cells 200, i.e., a large surface of each of the cells 200 is abutted with the vertical plate 20. In this way, the large surface of each of the cells 200 is abutted with the vertical plate 20, so that the cells 200 and the vertical plate 20 are capable of having a sufficient contact area, thereby ensuring the cooling effect on the cells 200. Moreover, since the cells 200 expands in a direction of the large surface when the thermal expansion occurs, the vertical plate 20 has an anti-deformation effect on the cells 200 by abutting the large surface of each of the cells 200 with the vertical plate 20. In some implementations, the cells 200, when arranged on the support plate 10, may also be provided in a thickness direction of the cells 200, so that a larger number of cells 200 can be arranged to ensure sufficient power supply.

## Claims

1. A liquid cooling structure (100), comprising:
a support plate (10), configured to support cells (200); and
a vertical plate (20), perpendicular to the support plate (10), wherein the vertical plate (20) comprises a main body (21) and a plurality of telescopic ribs (22) provided within the main body (21), a liquid cooling channel (23) configured to circulate a liquid coolant is formed in the main body (21), the plurality of the telescopic ribs (22) are spaced apart in the liquid cooling channel (23), and each of the telescopic ribs (22) is connected between two opposite side walls of the liquid cooling channel (23) to separate the liquid cooling channel (23) into a plurality of sub-channels (231); wherein
the vertical plate (20) further comprises a plurality of limiting ribs (24), the plurality of the limiting ribs (24) are provided on the two opposite side walls of the liquid cooling channel (23), and the plurality of the telescopic ribs (22) and the plurality of the limiting ribs (24) are alternately provided one by one;
the limiting ribs (24) are alternately provided on the two opposite side walls of the liquid cooling channel (23);
the main body (21), from top to bottom, comprises at least a flow segment (25) and a support segment (26), the flow segment (25) is formed with the liquid cooling channel (23), and the support segment (26) is a solid structure and is connected between the flow segment (25) and the support plate (10);
the main body (21) further comprises a barrier segment (27), the barrier segment (27) is provided at an end of the flow segment (25) away from the support segment (26), and the barrier segment (27) is a solid structure; and
a height (H1) the support segment (26) an_{d} a height (H2) of the barrier segment (27) are 0.05 to 0.1 times a height (H) of the main body (21), respectively.

2. The liquid cooling structure (100) according to claim 1, wherein along a direction perpendicular to a flow direction of the liquid coolant, a width (Wₐ) of each of the limiting ribs (24) is 0.1 to 0.9 times a width (W_{b}) of the liquid cooling channel (23).

3. The liquid cooling structure (100) according to claim 1, wherein the telescopic ribs (22) are inclined with respect to the two opposite side walls of the liquid cooling channel (23).

4. The liquid cooling structure (100) according to claim 3, wherein the telescopic ribs (22) are inclined at an angle (θ) between 30° and 60°.

5. The liquid cooling structure (100) according to claim 1, wherein a thickness (M) of each of the telescopic ribs (22) is in a range of 1.0 mm to 2.5 mm.

6. A battery pack, comprising:
a liquid cooling structure (100) as claimed in any one of claims 1 to 5; and
a plurality of cells (200), sequentially provided side by side on the support plate (10) of the liquid cooling structure (100).

7. The battery pack according to claim 6, wherein the plurality of the cells (200) are sequentially provided side by side along a length direction of the cells (200).

## Patentansprüche

1. Flüssigkeitskühlungsstruktur (100), umfassend:
eine Stützplatte (10), die dazu konfiguriert ist, Zellen (200) zu stützen; und
eine vertikale Platte (20), senkrecht zu der Stützplatte (10), wobei die vertikale Platte (20) einen Hauptkörper (21) und eine Vielzahl von Teleskoprippen (22) umfasst, die innerhalb des Hauptkörpers (21) bereitgestellt ist, ein Flüssigkeitskühlungskanal (23), der dazu konfiguriert ist, ein flüssiges Kühlmittel zu zirkulieren, in dem Hauptkörper (21) gebildet ist, die Vielzahl der Teleskoprippen (22) in dem Flüssigkeitskühlungskanal (23) beabstandet ist und jede der Teleskoprippen (22) zwischen zwei gegenüberliegenden Seitenwänden des Flüssigkeitskühlungskanals (23) verbunden ist, um den Flüssigkeitskühlungskanal (23) in eine Vielzahl von Unterkanälen (231) zu trennen; wobei
die vertikale Platte (20) ferner eine Vielzahl von Begrenzungsrippen (24) umfasst, die Vielzahl der Begrenzungsrippen (24) auf den zwei gegenüberliegenden Seitenwänden des Flüssigkeitskühlungskanals (23) bereitgestellt ist und die Vielzahl der Teleskoprippen (22) und die Vielzahl der Begrenzungsrippen (24) abwechselnd einzeln bereitgestellt sind;
die Begrenzungsrippen (24) abwechselnd auf den zwei gegenüberliegenden Seitenwänden des Flüssigkeitskühlungskanals (23) bereitgestellt sind;
der Hauptkörper (21) von oben nach unten zumindest ein Strömungssegment (25) und ein Stützsegment (26) umfasst, wobei das Strömungssegment (25) mit dem Flüssigkeitskühlungskanal (23) gebildet ist und das Stützsegment (26) eine massive Struktur ist und zwischen dem Strömungssegment (25) und der Stützplatte (10) verbunden ist;
der Hauptkörper (21) ferner ein Barrieresegment (27) umfasst, wobei das Barrieresegment (27) an einem Ende des Strömungssegments (25) weg von dem Stützsegment (26) bereitgestellt ist und das Barrieresegment (27) eine massive Struktur ist; und
eine Höhe (H1) des Stützsegments (26) und eine Höhe (H2) des Barrieresegments (27) jeweils das 0,05- bis 0,1-fache einer Höhe (H) des Hauptkörpers (21) sind.

2. Flüssigkeitskühlungsstruktur (100) nach Anspruch 1, wobei entlang einer Richtung senkrecht zu einer Strömungsrichtung des flüssigen Kühlmittels eine Breite (Wₐ) von jeder der Begrenzungsrippen (24) das 0,1- bis 0,9-fache einer Breite (W_{b}) des Flüssigkeitskühlungskanals (23) ist.

3. Flüssigkeitskühlungsstruktur (100) nach Anspruch 1, wobei die Teleskoprippen (22) in Bezug auf die zwei gegenüberliegenden Seitenwände des Flüssigkeitskühlungskanals (23) geneigt sind.

4. Flüssigkeitskühlungsstruktur (100) nach Anspruch 3, wobei die Teleskoprippen (22) in einem Winkel (θ) zwischen 30° und 60° geneigt sind.

5. Flüssigkeitskühlungsstruktur (100) nach Anspruch 1, wobei eine Dicke (M) von jeder der Teleskoprippen (22) in einer Spanne von 1,0 mm bis 2,5 mm ist.

6. Batteriepack, umfassend:
eine Flüssigkeitskühlungsstruktur (100) nach einem der Ansprüche 1 bis 5; und
eine Vielzahl von Zellen (200), die sequentiell Seite an Seite auf der Stützplatte (10) der Flüssigkeitskühlungsstruktur (100) bereitgestellt ist.

7. Batteriepack nach Anspruch 6, wobei die Vielzahl der Zellen (200) sequentiell Seite an Seite entlang einer Längenrichtung der Zellen (200) bereitgestellt ist.

## Revendications

1. Structure de refroidissement par liquide (100), comprenant :
une plaque de support (10), conçue pour supporter des cellules (200) ; et
une plaque verticale (20), perpendiculaire à la plaque de support (10), ladite plaque verticale (20) comprenant un corps principal (21) et une pluralité de nervures télescopiques (22) disposées à l'intérieur du corps principal (21), un canal de refroidissement par liquide (23) conçu pour faire circuler un liquide de refroidissement étant formé dans le corps principal (21), ladite pluralité de nervures télescopiques (22) étant espacées dans le canal de refroidissement par liquide (23), et chacune des nervures télescopiques (22) étant reliée entre deux parois latérales opposées du canal de refroidissement par liquide (23) pour séparer le canal de refroidissement par liquide (23) en une pluralité de sous-canaux (231) ;
ladite plaque verticale (20) comprenant en outre une pluralité de nervures de limitation (24), ladite pluralité de nervures de limitation (24) étant disposées sur les deux parois latérales opposées du canal de refroidissement par liquide (23), et ladite pluralité de nervures télescopiques (22) et ladite pluralité de nervures de limitation (24) étant disposées alternativement une par une ;
lesdites nervures de limitation (24) étant disposées alternativement sur les deux parois latérales opposées du canal de refroidissement par liquide (23) ;
ledit corps principal (21), de haut en bas, comprenant au moins un segment d'écoulement (25) et un segment de support (26), ledit segment d'écoulement (25) étant formé avec le canal de refroidissement par liquide (23), et ledit segment de support (26) étant une structure solide et étant connecté entre le segment d'écoulement (25) et la plaque de support (10) ;
ledit corps principal (21) comprenant en outre un segment de barrière (27), ledit segment de barrière (27) étant disposé au niveau d'une extrémité du segment d'écoulement (25) au loin du segment de support (26), et ledit segment de barrière (27) étant une structure solide ; et
une hauteur (H1) du segment de support (26) et une hauteur (H2) du segment de barrière (27) étant 0,05 à 0,1 fois une hauteur (H) du corps principal (21), respectivement.

2. Structure de refroidissement par liquide (100) selon la revendication 1, le long d'une direction perpendiculaire à une direction d'écoulement du liquide de refroidissement, une largeur (Wₐ) de chacune des nervures de limitation (24) étant de 0,1 à 0,9 fois une largeur (W_{b}) du canal de refroidissement par liquide (23).

3. Structure de refroidissement par liquide (100) selon la revendication 1, lesdites nervures télescopiques (22) étant inclinées par rapport aux deux parois latérales opposées du canal de refroidissement par liquide (23).

4. Structure de refroidissement par liquide (100) selon la revendication 3, lesdites nervures télescopiques (22) étant inclinées selon un angle (θ) compris entre 30° et 60°.

5. Structure de refroidissement par liquide (100) selon la revendication 1, une épaisseur (M) de chacune des nervures télescopiques (22) étant comprise dans une plage de 1,0 mm à 2,5 mm.

6. Bloc-batterie, comprenant :
une structure de refroidissement par liquide (100) selon l'une quelconque des revendications 1 à 5 ; et
une pluralité de cellules (200), disposées séquentiellement côte à côte sur la plaque de support (10) de la structure de refroidissement par liquide (100).

7. Bloc-batterie selon la revendication 6, ladite pluralité de cellules (200) étant disposées séquentiellement côte à côte le long d'une direction de longueur des cellules (200).
